# EUROPÄISCHE PATENTSCHRIFT

(11) **EP 0 756 930 B1**
(45) Veröffentlichungstag und Bekanntmachung des Hinweises auf die Patenterteilung: **24.10.2001**
(21) Anmeldenummer: 96890109.0
(22) Anmeldetag: 21.06.1996
(51) Int. Cl.: B32B 5/22, B32B 5/02

(54) **Dämmatte**
Insulation mat
Nappe fibreuse isolante

(30) Priorität: 02.08.1995 AT 42695 U
(43) Veröffentlichungstag der Anmeldung: 05.02.1997
(73) Patentinhaber: Tumfart, Kurt, 4183 Traberg (AT)
(72) Erfinder: Tumfart, Kurt, 4183 Traberg (AT)
(74) Vertreter: Hübscher, Gerhard, Dipl.-Ing.

(56) Entgegenhaltungen:
- EP-A- 0 262 092
- AT-A- 210 294
- DE-A- 4 333 758
- GB-A- 1 310 355
- GB-A- 2 005 192
- US-A- 3 733 226
- US-A- 3 837 995
- US-A- 3 867 248
- US-A- 4 131 664
- DUDEN Deutsches Universalwörterbuch, 3. Auflage, Dudenverlag, Seite 519

## Beschreibung

Die Erfindung bezieht sich auf eine Dämmatte mit wenigstens zwei Lagen Vlies aus Naturfasermaterial, die miteinander über eine mit einem wärmeaktivierbaren Kleber behaftete Zwischenschicht verklebt sind.

Dämmatten aus Naturfasem zeichnen sich gegenüber künstlich hergestellten Dämmstoffen neben anderen Vorteilen eines Naturproduktes vor allem durch die höhere Temperaturstandfestigkeit, die bessere Atmungsaktivität, die guten feuchtigkeitsspeichemden und staubbindenden Eigenschaften aus, so daß sich durch den Einsatz solcher Dämmatten als Dämmstoff im Bauwesen ein überaus gesundes Raumklima erzeugen läßt. Allerdings sind die Naturfaservliese wegen der Faserbindung einerseits und der Faserlänge anderseits in ihrer Dicke beschränkt und, um Dämmatten gewünschter Dämmeigenschaften zu erreichen, müssen wenigstens zwei Vlieslagen zur erforderlichen Dicke aufeinandergeschichtet werden.

Eine derartige Isoliervorrichtung aus einem mattenförmigen Naturfaserverbund zeigt die DE 4 333 758 A1, wobei einzelne Lagen von Fasern miteinander vemadelt, versteppt oder verklebt sind. Die EP 0 262 092 A1 zeigt ein lärmmindemdes Bauelement, welches aus mindestens einer Fasermatte, einer Trägerschicht und einer zwischen den Schichten angeordneten heißsiegelfähigen Klebeschicht besteht Als Klebstoffschicht kommen Materialien in Form eines feinkömigen Pulvers, eines Netzes oder einer Folie zur Verwendung, deren Aktivierung durch eine Wärmebehandlung, Druckbeaufschlagung od. dgl. eintritt. Das Bauelement kann wegen der formhaltenden Trägerschicht ohne Tragrahmen oder tragende Fläche verwendet werden. Schichten von Folien, Drahtgittem und Stoffen zwischen einzelnen Faserlagen sind aus der GB 1 310 355 A und Schichten von Folien aus der US 4 131 664 A bekannt.

Die bekannten Dämmatten mit wenigstens zwei Lagen Vlies aus Naturfasermaterial weisen zwar im allgemeinen gute Dämmeigenschaften auf, sie verlangen allerdings aufgrund ihres schichtenförmigen Aufbaus der einzelnen Fasermatten einen hohen Materialverbrauch.

Der Erfindung liegt daher die Aufgabe zugrunde, diese Mängel zu beseitigen und eine Dämmatte der eingangs geschilderten Art zu schaffen, die sich trotz eines zwei- oder mehrlagigen Aufbaues durch ihren guten Zusammenhalt und ihre leichte Verlegbarkeit auszeichnet und beste Dämmeigenschaften gewährleistet.

Die Erfindung löst diese Aufgabe dadurch, daß Lagen aus Vlies mit lamellenförmig verlegtem Fasermaterial vorgesehen sind, deren Lamellen im Querschnitt einen von der Normalen zur Zwischenschicht abweichenden, vorzugsweise bogenförmigen Verlauf aufweisen, wobei die Zwischenschicht aus einem Gitter, vorzugsweise einem Polypropylengitter, besteht.

Diese bogenförmig- oder schrägverlaufenden Lamellen bieten der durchströmenden Luft keine auf kurzem Wege die Matte querenden Kanäle od. dgl. und behindern damit eine solche Querdurchströmung, wodurch sich eine ausreichende Wärmedämmung erreichen läßt. Die Lamellenform aber erlaubt die Rohdichte der Matte geringzuhalten und bei entsprechender Materialeinsparung dennoch die Anforderungen hinsichtlich der Dämmeigenschaften zu erfüllen. Das als Zwischenschicht vorgesehene Gitter bindet dabei nicht nur die Vlieslagen aneinander, sondern es sorgt auch für die Dauerhaftigkeit der gewählten Lamellenstrukturen, so daß die Dämmatte erstaunlich formstabil und druckfest ist und sich dadurch nicht nur leicht verlegen läßt, sondern auch ohne weiteres gewickelt und gerollt werden kann. Das Gitter selbst dient im wesentlichen als Klebstoffträger und bildet eine Bewehrung für die Dämmatte, wobei Polypropylen auch bei feiner Gitterstruktur die gewünschte Festigkeit mit sich bringt. Es entsteht eine formstabile und gut hantierbare Dämmatte, die auf Grund ihrer Zwei- oder Mehrlagigkeit hervorragende Dämmeigenschaften ohne Verlust der Naturproduktqualität garantiert.

Zur Abstimmung der Dämmeigenschaften auf die jeweiligen Gegebenheiten könnten Lagen aus Vlies mit lamellenförmig verlegtem Fasermaterial und aus Vlies mit schichtenförmig verlegtem Fasermaterial miteinander verbunden werden.

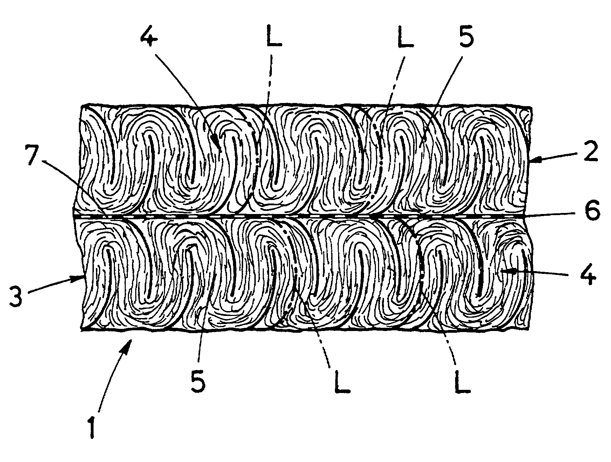

In der Zeichnung ist eine erfindungsgemäße Dämmatte an Hand eines schematischen Querschnittes beispielsweise veranschaulicht.

Eine Dämmatte 1 weist zwei Vlieslagen 2, 3 eines Vlieses 4 mit lamellenförmig verlegtem Fasermaterial 5 aus Naturfasern, beispielsweise Schaf- oder Baumwolle, auf, wobei die Lamellen im Querschnitt einen bogenförmigen Verlauf L einnehmen. Die beiden Lagen 2, 3 sind über eine Zwischenschicht 6 miteinander verbunden, welche Zwischenschicht 6 aus einem mit einem wärmeaktivierbaren Kleber behafteten Kunststoffgitter 7 besteht.

Die erfindungsgemäße Dämmatte 1 zeichnet sich bei großer Voluminösität und hervorragenden Dämmeigenschaften durch ihre hohe Formstabilität, geringe Rohdichte, große Robustheit und beste Hantierbarkeit aus.

## Patentansprüche

1. Dämmatte (1) mit wenigstens zwei Lagen (2, 3) Vlies (4) aus Naturfasermaterial, die miteinander über eine mit einem wärmeaktivierbaren Kleber behaftete Zwischenschicht (6) verklebt sind, **dadurch gekennzeichnet, daß** Lagen (2, 3) aus Vlies (4) mit lamellenförmig verlegtem Fasermaterial (5) vorgesehen sind, deren Lamellen im Querschnitt einen von der Normalen zur Zwischenschicht (6) abweichenden, vorzugsweise bogenförmigen Verlauf (L) aufweisen, wobei die Zwischenschicht (6) aus einem Gitter (7), vorzugsweise einem Polypropylengitter, besteht.

## Claims

1. An insulating mat (1) comprising at least two layers (2, 3) of non-woven (4) made of natural fibre material and stuck together via an intermediate layer (6) comprising a heat-activated adhesive, **characterised in that** layers (2, 3) of non-woven (4) are provided with fibre material (5) in sheets, the cross-section of the sheets having a preferably arcuate curve (L) deviating from the line perpendicular to the intermediate layer (6), wherein the intermediate layer (6) comprises a lattice (7), preferably a polypropylene lattice.

## Revendications

1. Nappe isolante (1), comportant au moins deux couches (2, 3) de matelas fibreux (4) formé d'un matériau à base de fibres naturelles, collées ensemble, par l'intermédiaire d'une couche intermédiaire (6) munie d'un adhésif activable par la chaleur, **caractérisé par le fait que** les couches (2, 3) de matelas fibreux (4) sont prévues avec un matériau fibreux (5) posé en forme de lamelles, dont les lamelles présentent, observé en coupe transversale, une allure (L) évoluant de façon différente de la perpendiculaire à la couche intermédiaire (6), de préférence une allure arquée, la couche intermédiaire (6) étant constituée d'un treillis (7), de préférence d'un treillis en polypropylène.
